# EUROPEAN PATENT SPECIFICATION

(11) **EP 0 833 715 B1**
(45) Date of publication and mention of the grant of the patent: **02.08.2000**
(21) Application number: 96912196.1
(22) Date of filing: 10.05.1996
(51) Int. Cl.: B23D 63/12, G05B 19/18

(54) **SAW BLADE TOOTH FORMATION**
SÄGEZAHNBILDUNG
FORMATION DE DENTS POUR LAME DE SCIE

(30) Priority: 22.05.1995 GB 9510275
(43) Date of publication of application: 08.04.1998
(73) Proprietor: ISELI & CO. AG, CH-6247 Schotz (CH)
(72) Inventor: ISELI, Benno, CH-6242 Schotz (CH)
(74) Representative: Feldmann, Clarence Paul
(86) International application number: IB9600478
(87) International publication number: WO9637329

(56) References cited:
- BE-A- 548 444
- DE-A- 3 235 131
- DE-A- 3 706 275
- DE-C- 672 577
- DE-C- 682 170
- FR-A- 2 641 997
- US-A- 4 501 092
- US-A- 4 603 392
- US-A- 5 048 236
- PATENT ABSTRACTS OF JAPAN vol. 7, no. 59 (M-199), 11 March 1983 & JP,A,57 205021 (T. TAKEROU), 16 December 1982,

## Description

This invention relates to a method and apparatus of forming the teeth of cutting tools such as saw blades and, in particular, but not exclusively the teeth of band saws according to the precharacterizing portion of claim 1 and 3 respectively.

As has been noted from national and international exhibitions many machines have been proposed for forming the teeth and gullet formations and combinations of the teeth of saw blades each of which formations and combinations comprises that part of a blade extending from the tip of a first tooth, along the front face thereof along the associated gullet region, along the rear face of the next adjacent tooth and along its top face to the tip thereof.

In practice, when forming the teeth of a saw blade the relative dimensions of the tooth gullet combination are governed by the height of the teeth relative to the untoothed edge of a band saw or the axis of rotation of a circular saw, the tooth pitch i.e., the spacing between adjacent teeth of a saw, the angle (the co-salled rake angle) of inclination of the front face of the tooth with respect to a reference line (i.e, radial line in the case of a circular saw and a line perpendicular to the longitudinal direction of the body of a band saw); the top face angle, namely the inclination of the that part of the tooth rear face immediately adjacent to the tip thereof and with respect to the longitudinal direction.

Many machines hitherto provided for producing the teeth gullet formations or combinations are such that once the arrangements for displacing the grinding wheel relative to the saw to produce a tooth/gullet combination have been set by means of generally manually controllable adjustment means so that it has not been possible selectively to adjust and or control the actual form of the tooth gullet combination during an actual grinding operation except for possible adjustment of the magnitudes of the parameters above mentioned.

It has also been proposed to utilise computers for controlling the movements of a machining i.e., grinding wheel in such manner that under the control of the computer the required tooth profile is achieved.

Thus there is disclosed in United States Patent No 5 048 236 representing the closest prior art a method of forming gullet and tooth formations for the teeth of a saw blade by displacing a tool for machining each gullet and tooth formation in a predetermined relationship relative to simultaneous displacement of the blade in a direction transverse to the movements of the tool. The displacements of the tool and the blade are under the control of a computer system which so controls the relative operational displacements of the tool and blade in such manner that the tool follows a predetermined path relative to the saw blade whereby the resulting gullet and tooth formations have a desired profile.

Additonally French Patent Specification No 2 641 997 discloses apparatus for producing gullet and tooth formations which have a required profile including a tool which is diplaceable relative to the teeth of a saw blade.

The apparatus under the control of cam systems moves the tool towards and away from the tooth and gullet formation to be produced whilst at the same time the blade is displaced so as to produce relative movements in a direction transverse to those of the tool. The relative speeds of the tool relative to the blade are under the control of a control box.

In practice, it has been found that by involving movements of the blade during the tooth and gullet machining introduces problems of indexing the tooth position in the event of s need to repeat a machinging operation for what ever reason.

Thus it would be convenient to be able readily to avoid the need for blade displacement during a machining operation. so that it would be possible to vary the actual form of the teeth gullet combinations that can be produced on any one machine so as to be able to produce, if required, differing forms to the tooth gullet combinations from saw to saw and also upon the same saw.

In the formation of present day saw blades it is a conventional practice to provide hard material tips upon the teeth of the blades to provide the actual cutting edges of the teeth. In this specification reference to the machining of the saw blade teeth implicitly includes the machining of the aforementioned hard material tips.

It is an object of the present invention to provide a method of and apparatus for enabling variation of the form of tooth and gullet combinations as and when required.

Broadly, according to a first aspect of the invention there is provided a method of forming a tooth and gullet formation or combination for the teeth (2) of a cutter tool such as a saw blade (1) which is displaceable so as the enable successive teeth to be positioned at a machining position at which the tooth and gullet formations are produced, by displacing under the control of a computer system a tool for so machining the tooth or gullet that the operational movements of the tool (8) with respect to the saw blade teeth (2) to be machined are constrained to follow a machining path (19) defined by movement direction coordinates (X,Y) that are inclined to each other and of which one direction coordinate (Y) is aligned with the required direction for the front face (3) of the tooth (2) being machined and in such manner that the tooth front face (3), the gullet (5) thereof, the rear face (6) and the top face (7) of an immediately adjacent tooth (2) are machined, characterised by positionally fixedly locating the saw blade so that the next tooth to be ground is fixedly located during maching at a reference position, in that the computer system (51-68) SERVES to control the displacements of the tool (8) along said X and Y coordinates relative to the positionally fixed blade that the tooth gullet formations are is machined according to predetermined machining profiles and in that the machining of the tooth front face (3), the gullet (5) thereof and the rear and top faces (6,7) of an immediately adjacent tooth (2) can be effected by a single uninterrupted pass of the tool (8) relative to the positionally fixed blade.

Preferably, the movement of the grinding wheel relative to the saw is so reversible as to enable removal of any machining burrs produced at the top face of a tooth during the initial grinding passage of the grinding wheel.

In accordance with a further aspect of the invention there is provided apparatus for forming a tooth and gullet formation or combination for the teeth (2) of a cutter tool such as a saw blade (1) including means for displacing the blade to bring successive teeth to a machining position at which the tooth and gullet formation are produced, means for mounting a tool for machining the blade teeth when in said machining position in such manner that the operational movements of the tool (8) with respect to the saw blade teeth (2) to be machined are constrained to follow a machining path (19) defined by movement direction coordinates (x,y) that are inclined to each other and of which one direction coordinate (y) is aligned with the required direction for the front face (3) of the tooth (2) being machined and means for displacing the tool under the control of a computer system (51-68) in such manner that the tooth front face (3), the gullet (5) thereof, the rear face (6) and the top face (7) of the next tooth to be machined characterised by means for positionally fixedly locating the saw blade so that whilst a tooth is being machined the blade is positionally fixed, and in that the computer system (51-68) serves to control the displacements of the tool (8) relative to the positionally fixed blade So that the tooth gullet formation is machined according to predetermined machining profiles in a single uninterrupted pass of the tool(8) relative to the positionally fixed blade.

For a better understanding of the invention and to show how to carry the same into effect reference will now be made to the accompanying drawings in which:-
Figure 1 very schematically illustrates a fragmentary part of a saw blade and in particular a tooth and gullet combination together with a portion of a grinding wheel mounted as to be able to machine the tooth gullet and combination to produce a required form to the tooth and gullet formation.
Figure 2 shows to an enlarged scale a first embodiment of a grinding wheel illustrating the form of the grinding region of a grinding wheel;
Figure 3 shows to an enlarged scale a second embodiment of a grinding wheel illustrating the form of the grinding region of a grinding wheel;
Figure 4 very schematically illustrates the geometry of the instantaneous positioning of the grinding wheel relative to a tooth/gullet combination during the machining thereof, such positioning being in accordance with the concepts of the invention;
Figure 5 illustrates part of a saw blade having teeth produced by the concepts of the invention;
Figures 6A to 6E respectively schematically illustrate differing forms of saw blade teeth profiles;
Figure 7 very schematically illustrates the broad concepts of a layout for a machine for grinding a band saw, the machine layout being based upon the concepts of the invention;
Figure 8 illustrates to an enlarged scale the main details of arrangements for mounting and displacing a grinding wheel;
Figure 9 illustrates to an enlarged scale details associated with the support of a saw blade;
Figure 10 illustrates to an enlarged scale the main details of a machine incorporating the concepts of the invention;
Figure 11 very schematically illustrates in diagrammatic schematic form a computer numerically controled system for controlling the machining of the saw blade teeth.

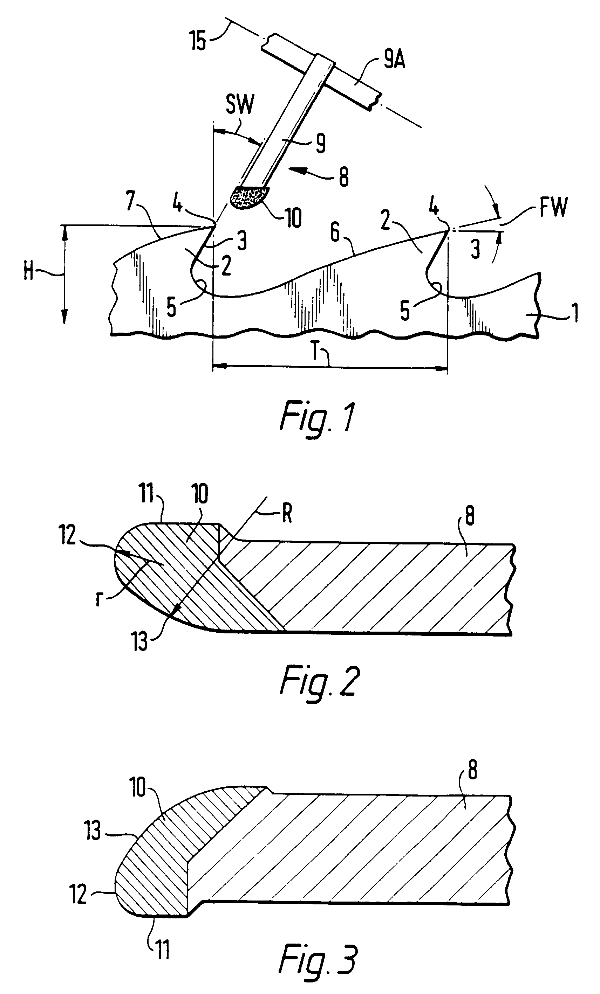

Referring now to the drawings and particularly to Figure 1 which shows in very schematic form a fragmentary portion of a band saw 1 including two teeth 2. It is a conventional practice to mount to each tooth a hard material (Tunsten carbite; Silican carbide; Stellite etc.,) tip which in use provides he actual cutting edges of the teeth to which they are mounted. In the Figure 1 these hard material tips are not shown since their use is universally well known. Each tooth includes a front face 3 terminating at the tooth tip 4 and the gullet region 5 which latter smoothly merges into the rear face 6 of the tooth 2 immediately adjacent thereto and terminates at the top face 7 of this latter mentioned tooth which in turn terminates at the tip 4 of this latter mentioned tooth.

In other words, the tooth gullet combination comprises that part of a blade extending from the tip 4 of a first tooth 2 through the front face 3 and the gullet region 5 thereof and along the rear face 6 and top face 7 of the next adjacent tooth and to the tip 7 thereof.

The Figure 1 also shows a fragmentary portion of a grinding wheel 8. The grinding wheel includes a body 9 which is mountable to a drive shaft 9A. The peripheral region 10 of the wheel 8 is provided with a zone 10A of a grinding material, i.e., Borazon, for grinding the above discussed teeth surfaces to provide a required form for the tooth and gullet combination. The grinding wheel peripheral region 10 is, in practice, so shaped as to provide a working surface which renders the wheel suitable for a particular form of tooth gullet combination thereby to satisfy user requirements for the cutter tool teeth to be machined.

In the Figure 1, the above mentioned face angle is identified by the letters SW; the pitch of the teeth by the letter T; the top face angle by the letters FW and the overall tooth height by the letter H.

The above mentioned factors can have for example, the following ranges:-

Height H from 0 to 25mm; pitch T from 6 to 100mm; face angle SW from 0 to 30 degrees and the top face angle FW from 0 to 30 degrees.

Figures 2 and 3 schematically illustrate two forms of grinding wheel profile. It will be understood that, in practice, the specific profile of the grinding wheel will be closely related to the required profile of the teeth to be produced.

As can be seen from the Figures 2 and 3 the profile of the grinding material region 10 of the wheel will, as is substantially conventional, include a radially directed section 11, which is intended to produce the straight length of the tooth front face 3, and a curved region 12 having a radius (r) merging into the straight length 11 to define the form of the gullet 5 in the immediate vicinity of the front face 3. The remainder 13 of the grinding material region profile includes a curved portion having a general radius of indicated by the letter (R) this curved portion being shaped so as to enable the production of the remainder of the tooth/gullet combination.

In accordance with the proposals of the invention, arrangements are provided for controlling the movements of the grinding wheel 8 with respect to the saw blade 1 whose tooth and gullet combination are to be machined by arranging that the grinding wheel 8 can be positionally displaced under the control of a computerised control system which is such as to enable any of the above mentioned factors to be programmed and varied as considered convenient. It will be understood that the grinding wheel is angularly set to the angle SW before a maching operation. This setting can be manually effected or by the co puter control system.

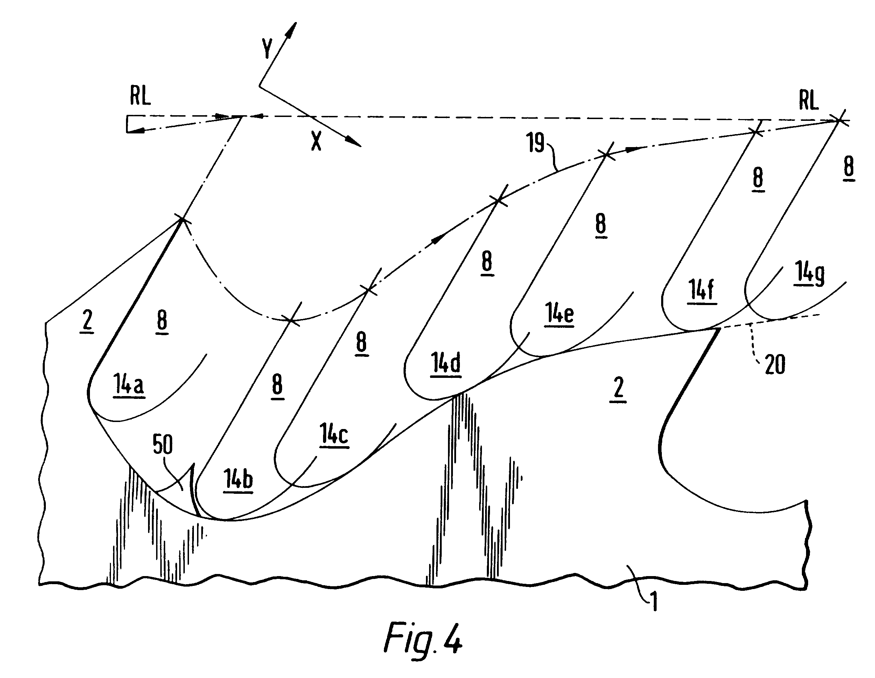

Referring now to Figure 4 this illustrates to an enlarged scale a fragmentary portion of a band saw blade 1, the portion shown including two teeth 2, and, in particular, indicating one of the above discussed tooth and gullet formations.

In addition, the Figure 4 very schematically indicates successive positions 14a, 14b, 14c, 14d, 14e, 14f and 14g of the grinding wheel 8 with respect to the tooth and gullet combination during the grinding operation by the grinding wheel 8 upon the tooth gullet combination.

In order to effect the requisite grinding displacements of the grinding wheel it is necessary for the grinding wheel 8 to be moveable in two directions or axes at right angles to each other. In this specification these two directions or axes are identified as the X and Y axes. For reasons to be considered hereinafter the X axis is required to be parallel to the axis 15 of rotation of the shaft 9A carrying the wheel 9. In addition, for reasons to be considered hereinafter the Y axis has to be aligned parallel to the required front face angle. For this reason the blade 8 is so mounted as to be able to be inclined to the vertical as is schematically shown in Figure 1.

During the grinding of the tooth gullet combination the wheel 8 is progressively displaced through an operational path defined by a combination of displacements along said X and Y axes under the control of the computer system to be discussed hereinafter. Some of these displacements are illustrated in the Figure 4.

The shaft 9A, whose axis of rotation is indicated in Figure 1 at 15 has to be so mounted as to permit the attainment of the the wheel positions shown in the Figure 4 when the grinding wheel 8 is displaced under the control of the computer numerically controlled control system. In practice, points along the axis 15 (Figure 1) of the grinding wheel may be considered as following the path shown in chain dotted lines and in this specification is termed the tool path 19. The regions of contact between the grinding wheel 8 and the saw blade teeth 2 follows a corresponding second path 20 termed the workpiece path.

This path 20 corresponds to the required shape of the saw blade teeth.

In relation to the Figures 1 and 4, for the purposes of discussion in relation to the concepts of the invention, there is illustrated a reference line RL-RL which, in practice, extends parallel to the lengthwise direction of a band saw blade and radially for a circular saw blade. As will be discussed this line RL-RL can be regarded as defining a reference for the setting or establishment of the start and finish positions for the grinding wheel 8 when grinding a tooth gullet combination.

In practice, to produce such a tooth gullet combination and tooth form the grinding wheel is advanced downwardly from its start position, in the direction of the axis or coordinate Y direction, the latter direction being that of the required face/hook angle until the outermost portion of the wheel has reached the position 14a as shown. The grinding wheel 8 is then moved along the working path 20 of the work piece grinding path through the various positions 14b to 14g which represents the resultant of the combined displacements along the mutually perpendicular X and Y coordinates. Thus the work piece path 20 can be regarded as the locus of these two movements directions. This locus is conveniently shown in the Figure 4 as the grinding wheel path 19. In this Figure 4 as mentioned the position of the actual region of contact between the grinding wheel and the surface being machined is schematically indicated in several positions along the path to be followed, the positions obtained by predetermined progressive variations of the X and Y coordinates.

It will be appreciated that the form of the profile of the grinding wheel grinding region is of considerable importance and, in practice, the grinding wheel form effectively sets the form of the tooth/gullet combination produceable by the grinding wheel.

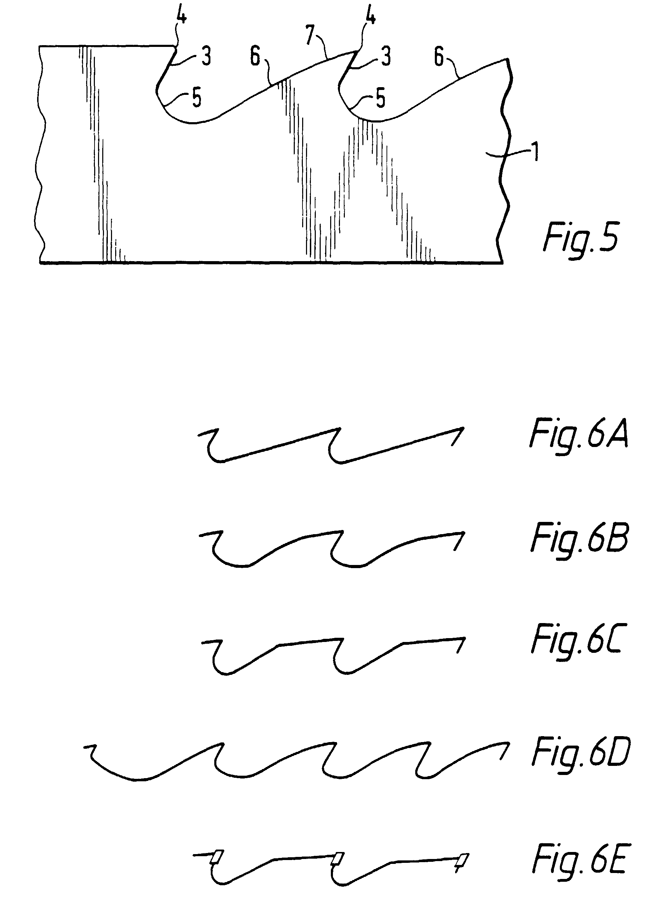

Figure 5 shows two tooth profiles each having the front face 3; a gullet region 5 and the rear/top face 6,7 of the adjacent tooth. In the particular blade portion depicted it will be noted that the transition zone between the front face 3 and the initial part of the gullet 5 includes a relatively small curvature section in advance of the more gradual sweeping curve of the rear and top face of the tooth immediately in advance thereof.

It will be understood that for the purposes of removal of material from the teeth the grinding operation can be carried out in a single wheel pass or two or more wheel passes. In practice a single pass is preferred for production economic reasons.

To avoid the need for excessive grinding operations the saw to be machined would be conveniently rough cut by any convenient means so as to reduce grinding requirements to a minimum.

Since the form of the grinding achived is, in practice, set by the particular form of the aforesaid locus it will be appreciated that various ground shapes can be produced by merely varying the form of the path 20.

In other words by controlling the specific X and Y coordinate displacements by means of the computer numerically control control system of the invention allows for and enables the continuous selection of the X and Y coordinates in order to attain a particular required tooth profile and thus grinding profile. Thus it is possible to produce within the limits of the actual grinding wheel profile what ever tooth form is required for a particular purpose.

The Figure 6 very schematically illustrates at 6A; 6B; 6C; 6D and 6E different tooth profiles. The Figure 6E schematically illustrates a blade tooth profile when having hard matrerial tips mounted to the teeth.

In addition, as a well known requirement, it is a possible by suitable arrangement of the grinding wheel locus to provide for teeth to have difffering heights relative to said reference line RL-RL or in the case of a circular saw the axis of blade rotation.

In accordance with the concepts of the present invention a data bank of possible tooth formation profiles, grinding schedules and machine control data and associated mechanical, electrical, pneumatic, hydralically controlled elements are actuated as and when required to enable the tooth grinding to take place, and the data stored in the storage facilities of the computer control system.

The control system is programmed so as to be able to control the operation of means for displacing the grinding wheel as required along the X and Y coordinates, and for indexing the saw with respect to the rest position of the grinding wheel at the end of each tooth machining operation.

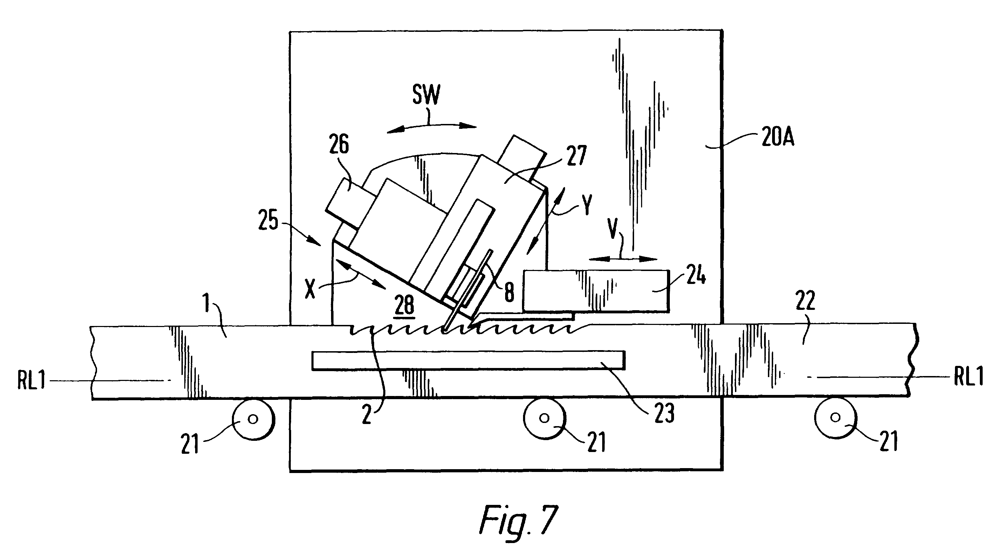

Figure 7 very schematically illustrates the general principles for a layout of a machine for machining the teeth of a saw and particularly a linear saw such as a band saw.

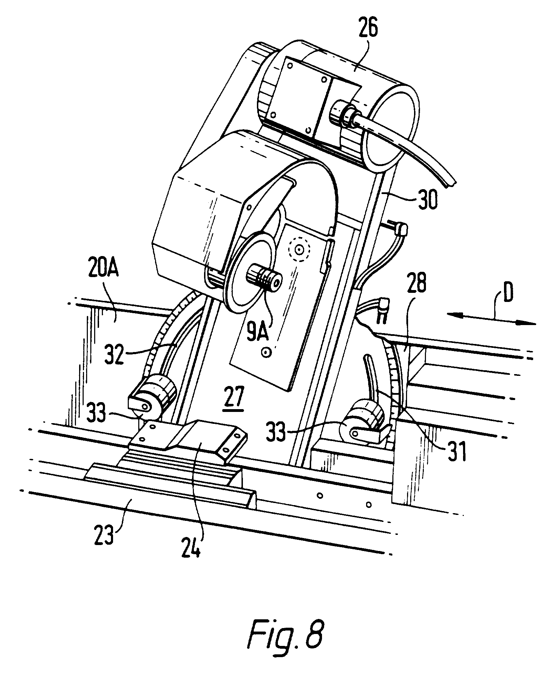

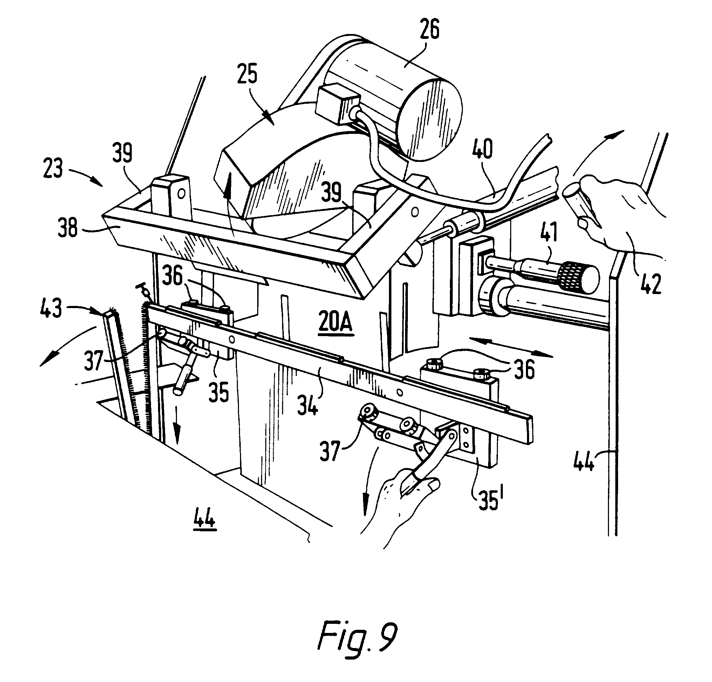

The machine includes a main frame construction 20A which is provided with supports 21 for mounting a band saw 1 to the machine in a position necessary for the grinding thereof i.e., with the reference line RL1-RL1 horizontal. Arrangements 23, supported from the main frame 20A, are provided for clamping the blade in the required grinding position. The clamping arrangements (Figures 8 and 9) are operated by hydralulic/pneumatic piston arrangements which are themselves computer controlled.

Indexing means 24 are provided for indexing, that is positioning, the saw 1 so that the tooth and gullet combinations can be sucessively correctly positioned within the operation range of the grinding wheel. The indexing means 24 wich includes an indexing finger are operated by hydraulic/pneumatic piston arrangements that are computer controlled. In addition, control means (not shown in Figure 7) are provided for enabling precise positioning of the saw during the initial positioning of the saw on the machine.

A grinding wheel assembly 25 including a grinding wheel support and associated drive motor 26 is mounted upon a support slide 27 which is slidably displaceable along the direction/axis Y-Y with respect to a support unit 28 which is positionally movable lengthwise of the main frame 20A, i.e., along a direction lying in a horizontal plane.

The grinding wheel assembly 25, is thus so mounted that the grinding wheel 8 can be displaced too and from the saw to be machined and also such that the the grinding wheel can be additionally axially displaced lengthwise of the saw to perform a grinding operation. The grinding wheel is displaceable in the aforesaid X and Y directions by means of hydraulic/pneumatic pistons (not shown in Figure 7), the operation of the latter being under the control of computer control system.

Figure 8 schematically illustrates in greater detail the construction of the grinding wheel assembly 25 and its associated supporting arrangements. In the Figure the main support 28 that carries the slide 27 is selectively positionable so as to enable the grinding wheel to be angularly inclined to establish the required Y coordinate direction.

The slide 27 is slidable mounted in a guide plate 30 that is rotably mounted to the support 28, whereby the direction of sliding movement of the slide can be selectively angularly set relative to the support 28 to attain the reguired inclination for the grinding wheel in accordance with the desired direction Y-Y and thus tooth face angle.

The guide plate 30 is provided with arcuate slots 31 and 32 which are angularly calibrated corresponding to required face angles.

Locking elements 33 are provided for locking the guide plate 30 and thus the grinding wheel 8 at a required setting.

This setting can be carried out manually or otherwise settable by the computer control system by actuating pneumatic cylinders by way of a suitable electromechanical contol means responsive to signals from the computer.

The provision of the two arcuate slots is to enable enable two principal machining positions a first which enables machining of right hand facing teeth and a second for enabling the machining of left hand facing teeth.

Arrangements (not shown) are provided for enabling the initial position of the grinding wheel to be adjusted to take into account the thickness of the blade.

The Figure 8 includes the indexing means 24.

Referring now to Figure 9 this schematically illustrates in greater detail the construction of the blade support and clamping arrangements previously mentioned in relation to Figure 7.

The blade support includes an elongate support bar 34 which is mounted at each end region thereof to two rectangular plates 35 that are in turn mounted to the face plate (not shown in Figure 9) of the main frame 20A. This face plate is vertically adjustable to enable verticsl adjustments to the level of the bar 34 and thus the vertical setting of any blade carried by the support bar 34.

The longitundinal axis of the bar is parallel to the reference direction RL1-RL1 previously mentioned. The upper parts of the plates 35 project above the bar 34. Each plate mounts one to each end thereof a roll 36 rotatable about a vertical axis. The diameter of the rolls is such that their peripheries overhang the support bar 34. A second pair of rolls 37 is carried by each plate 35, these rolls 37 being, by way of brackets, effectively pivotally mounted to the plates 35, in such manner that they can be diplaced towards and away from cooperation with the associated rolls 36. In the Figure 9 the rolls 36 are shown in their retracted positions. When in this position a saw blade can be mounted to or removed from the support bar 34. As indicated the two pairs of rolls 37 are manually movable to their closed positions in which they will engage with the outer face of a blade when upon the support bar with the rolls 36 engaging with the rear face of the blade (not shown in Figure 9) The relative separation of the rolls when in their closed positions is such as to exert sufficient pressure upon the blade to hold in place but to allow displacement through the roll pairs which guide it during blade indexing operations.

In the figure 9 is also shown schematically the mounting of the blade clamp 23. As will be seen the blade clamp 23 comprises a main bar 38 connected at each end to a support bar 39 that is pivoted to the main frame structure 20A. The clamp 23 is swingable between a raised and thus non-clamping position as shown in the Figure and a downward position in which the bar presses against a blade 1 so as firmly to hold the portion of the blade having the teeth that are next to be machined very firmly so that the blade is retained in a firmly fixed position during all machining operations. The blade clamp 23 is positionally moved between its clamping and non-clamping positions by pneumatic cylinders 40.

The Figure 9 indicates the location of the grinding wheel assembly 25 and the motor 26,. In addition, the Figure very schematically illustrates means 41 for enabling fine adjustment of the position of the slide guide plate relative to the main frame structure during the setting up of the machine whereby the arrangements with respect to means for producing the displacement of the grinding assembly with respect to said X direction are correctly set or position with respect to the defined start settings for the machine. In practice such movement can be produced by any means thought convenient, i.e.,electro-mechanical or pneumatically or hydraulically controllable means.

The Figure 9 illustrates the blade support and guide arrangements when in their open positions. As is vindicated the blade guide arrangements are manually controllable since they are essentially only required to be operated at the time of mounting or removing a blade relative to the machine. The movements of the blade clamp are controlled by the pneumatic cylinders 40. In practice the actuation of these blade clamp cylinders 40 can be under the manual overide control of 'locking' means schematically indicated by a hand 42.

Blade wiping arrangements for cleaning the blade whilst on the machine are indicated at 43.

The Figure also schematically ilustrates fragmentary portions of the general framework and protective housings of the machine, these being generally indicated at 44.

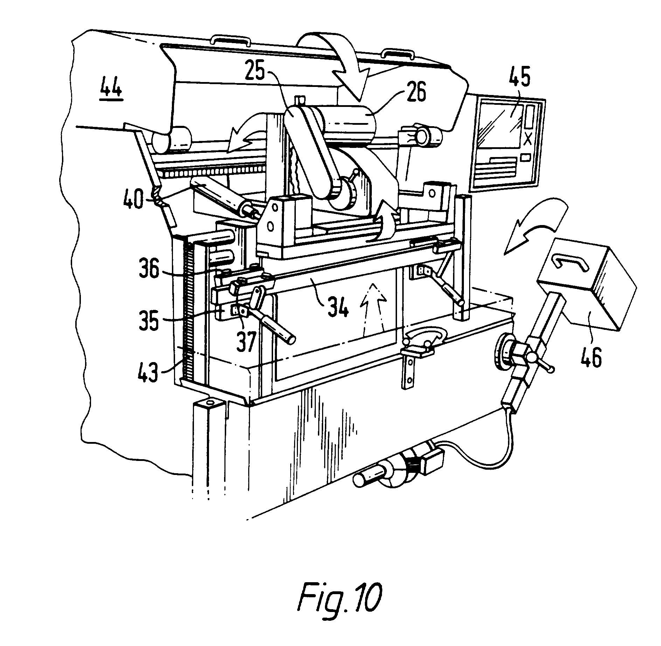

Figure 10 schematically illustrates in more detail the overall layout of the machine the components of which have been discussed hereinbefore. It will be appreciased that the various movable components ofthe machine will have associated therewith pneumatic or hydraulic cylindrers whose operation csn be controlled in response to predtermined control signals. Since the utilisat9on of such cylinders and there modes of mounting and operation interconnection are well known it is thought that detailed description thereof is not required.

Since the machine is computer controlled in relation to its major operation functions a Visual Diplay Unit 45 is indicated together with an operator's keyboard console 46 , the latter being positionally displaceable, for example, facilitate blade mounting and removal, and for positioning to suit an operator of the machine.

Various arrows 47 indicate directions of opening etc., of the housings 43 and th general directions of the movements of positionally movable major components.

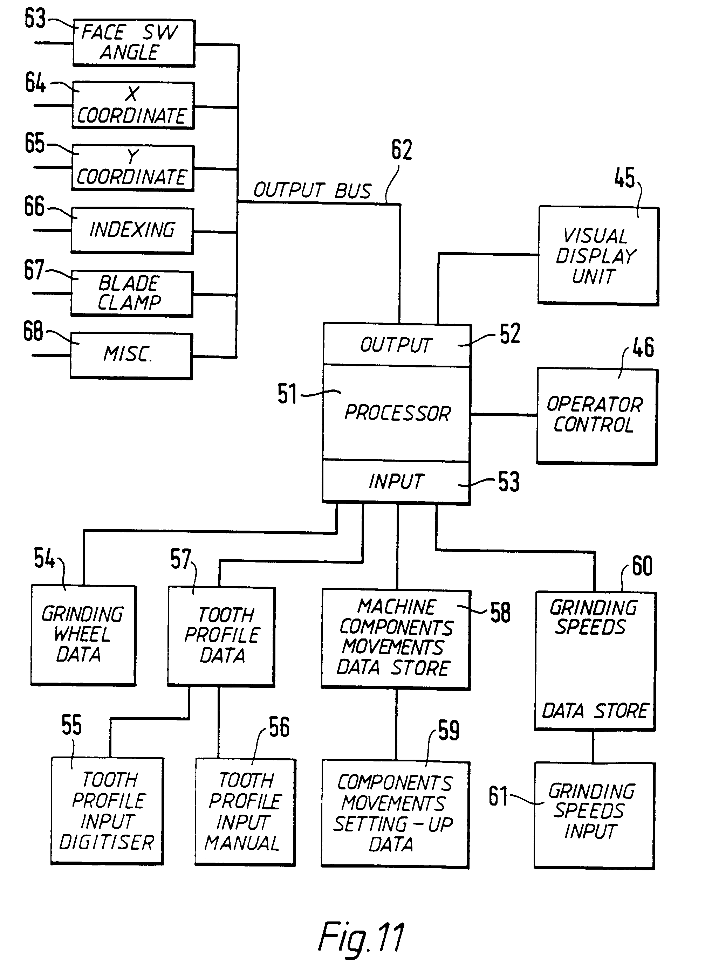

The computer control system is schematically illustated in diagrammatic form in Figure 11. The system includes a central processor 51 having associated output and output sections 52 and 53.

The input section is intendedto receive data relating to the various requiremnts for controlling and operating the machine hereinbefore discussed.

Since as has been considered hereinbefore an important requirement for the machine is to make use of different types of grinding wheel forms a storage facility 54 is provided for storing in digital form those profiles it is desired to be able to machine. This data store 54 provideds input on demand to the processor input 53.

The type of grinding wheel data involved includes the radii 'r' and 'R' and the blade thicknesses. It will be understood that for very precise grinding wheel forms additional radii associated with various parts of the overall grinding periphery would be utilised.

Since also it is desired to be able to grind many possible forms of tooth profile a store 57 is provided for storing such profiles in digital form. The profiles can be of any form considered suitable. For example, profiles such as illustrated in Figures 6A to 6G. The profiles can be entered into to the store in any convenient manner including the facility of digitising by a digital analyser, this being indicated at 55 or by drawing the profiles and inputting the dimensional relationships into the data store 57. Such drawn profiles can be suitably scanned by a scanner document reader.

Thus the the provision of the stored profiles effectively establishes in the data store 57 the requisite data representing the X and Y coordinates and thereby defining the loci of the combined movements of the grinding wheel 8 required to establish a required profile for a ground tooth/gullet combination.

For convenience the storage facilities for these X and Y coordinates have been represented by a components movements data store 58 which receives input from an input means 59 which enables the X and Y components to be established from the tooth profiles.

In the case where a plurality of such loci are stored in addition to the numerical storage the computer processor can be arranged to display the loci of the profile to be machined on the display unit 45. This display unit can be used during the establishment of such loci and the checking of the acceptabilty of a possible tooth/gullet combination.

Furthermore since the nature of the grinding wheel construction and that of the material to be machine play an important part in the achieving optimum machining conditions a data store is required in which is which established grinding speeds from a consideration of data associated with the wheel such as wheel diameter, wheel thickness, the various radii associated with the grinding periphery of the wheel such as radii 'R' and 'r7. In addition, the characteristics of the tooth to be ground are utilised in setting grinding speeds, namely characteristics such as blade thickness; material of the teeth. The data associated with these factors is stored in a grinding speeds data store 60. This store 60 has associated therewith a grinding speeds input unit 61 which produces from raw data the speeds to be stored.

In practice, it will be appreciated that the programming would be such that the computer control processor is able to average out the changes from one coordinate pair of X and Y axes to the next to establish a smooth transition therebetween.

The central processor output 52 connects via an output bus 62 with the respective means for producing the control signals appropriate to the particular function to be carried out. It will be understood that the particukar signal levels will be related to the particular function involved. Thus, for the purposes of explanation the processor output 52 feeds via an output bus 62 the various signals to output units as follows a face angle unit 63, a X-coordinate unit 64; a Y-coordinate 65; and indexing control unit 66; blade clamping control 67. In addition, a further unit identified as a miscellaneous unit 68 takes into account the possibility of any further requirement to enable computer control of any additional factor associated with the grinding of the teeth and the control of the operation of the machine.

It will be appreciated that since the actual machining profiles for the teeth are established as data in a computer store it is possible readily to introduce variations to the profile as and when required. Such a possibility is demonstrated by the indication of the provision of a 'spike' 50 in the gullet as shown in Figure 4, the so-called 'spike' 50 being achieved by the appropriate displacements of the grinding wheel along the coordinates X and Y.

As a further aspect, the computer can be arranged to define the appropriate grinding speed in relation to any stored profile and other associated factor.

In relation to the grinding speed used this is advantageously freely programmable over the whole tooth form to provide for example optimal tooth machining quality.

Also the number of cutting passes can be selectively set as considered necessary for grinding, polishing, deburring etc.

Furthermore, provision may be made for causing the grinding wheel to undergo a rocking action for the purposes of, for example, polishing.

A further advantage arising from the concepts of the invention is that the tooth pitch can be checked and if needs be adjusted.

As part of the miscellaneous provisions the central processer can be arranged to control for example, the checking of the operation of the indexing means so that tooth pitch can be monitored and corrected if it should be necessary and the checking of wheel wear. Itwill be understood that the actual control of the machine and its associated computer system will be by means of the programming of the central processor and that in so far as an operator is concerned he will respond to a sequence of menus presented upon the display 45, as a result of his using the operator control 46.

## Claims

1. A method of forming a tooth and gullet formation or combination for the teeth (2) of a cutter tool such as a saw blade (1) which is displaceable so as the enable successive teeth to be positioned at a machining position at which the tooth and gullet formations are produced, by displacing under the control of a computer system a tool (8) for so machining the tooth or gullet that the operational movements of the tool (8) with respect to the saw blade teeth (2) to be machined are constrained to follow a machining path (19) defined by movement direction coordinates (X,Y) that are inclined to each other and of which one direction coordinate (Y) is aligned with the required direction for the front face (3) of the tooth (2) being machined and in such manner that the tooth front face (3), the gullet (5) thereof, the rear face (6) and the top face (7) of an immediately adjacent tooth (2) are machined, characterised by positionally fixedly locating the saw blade so that the next tooth to be ground is fixedly located during maching at a reference position, in that the computer system (51-68) SERVES to control the displacements of the tool (8) along said X and Y coordinates relative to the positionally fixed blade that the tooth gullet formations are is machined according to predetermined machining profiles and in that the machining of the tooth front face (3), the gullet (5) thereof and the rear and top faces (6,7) of an immediately adjacent tooth (2) can be effected by a single uninterrupted pass of the tool (8) relative to the positionally fixed blade.

2. A method as claimed in claim 1, and characterised in that the movement of the tool (8) relative to the saw blade (1) is reversible so as to enable removal of any machining burrs produced at the top face (7) of a tooth (2) during the initial grinding passage of the grinding tool (8).

3. Apparatus for forming a tooth and gullet formation or combination for the teeth (2) of a cutter tool such as a saw blade (1) including means for displacing the blade to bring successive teeth to a machining position at which the tooth and gullet formation are produced, means for mounting a tool for machining the blade teeth when in said machining position in such manner that the operational movements of the tool (8) with respect to the saw blade teeth (2) to be machined are constrained to follow a machining path (19) defined by movement direction coordinates (x,y) that are inclined to each other and of which one direction coordinate (y) is aligned with the required direction for the front face (3) of the tooth (2) being machined and means for displacing the tool under the control of a computer system (51-68) in such manner that the tooth front face (3), the gullet (5) thereof, the rear face (6) and the top face (7) of the next tooth to be machined characterised by means for positionally fixedly locating the saw blade so that whilst a tooth is being machined the blade is positionally fixed, and in that the computer system (51-68) serves to control the displacements of the tool (8) relative to the positionally fixed blade So that the tooth gullet formation is machined according to predetermined machining profiles in a single uninterrupted pass of the tool(8) relative to the positionally fixed blade.

4. Apparatus as claimed in claim 3, and characterised in that said two direction coordinates (X,Y) are at right angles to each other.

5. Apparatus as claimed in claim 3 or 4, and characterised in that the tool (8) is operationally carried by a slide member (27) slidable in a slide guide member (30) mounted to a support unit (28) in such manner as to be angularly adjustable relative to the support unit, whereby the slide direction of the slide member (27) can be set the align with a required face angle for a tooth front face thereby to define said tool movement direction (Y); means for mounting the support unit so that the latter can be displaced along the direction (X), and means controllable by the computer system (51-68) for controlling the displacements of the slide member (27) and support unit (28) in said directions.

6. Apparatus as claimed in claim 5, and characterised by pneumatic or hydraulic cylinders for producing the operational displacements of the slide (27) and the support unit (28), and by means reponsive to control signals produced by the computer system (51-68) for controlling the operation of the cylinders.

7. Apparatus as claimed in claimn 3, 4, 5 or 6, and characterised in that the computer system (51-68) includes input means (55,56) for establishing a plurality of different machining profiles for said tool displacement path (19) and means (51) for storing such profiles.

8. Apparatus as claimed in claim, 3, 4,5 6, or 7, and characterised in that the computer system includes input storage means (58,59) for storing data associated with required displacements of the slide and support unit to produced a required grinding profile.

9. Apparatus as claimed in claim 3,4,5, 6, 7 or8, and characterised in that the computer system (51-68)includes input storage means (60,61) for storing data associated with operational speeds for the tool.

10. Apparatus as claimed in claim 3, 4, 5, 6, 7, 8 or 9 and characterised in that the computer system (51-68) includes input storage means (54) for storing data associated with the operational characterisitics of the tool (8).

11. Apparatus as claimed in any one of claims 3 to 10, and characterised in that the movement of the tool (8) relative to the saw blade (1) is reversible so as to enable removal of any machining burrs produced at the top face (7) of a tooth (2) during the initial grinding passage of the grinding tool (8).

## Patentansprüche

1. Ein Verfahren zur Erstellung einer Zahn- und Zwischenraumformation oder einer Kombination aus beiden für die Zähne (2) eines Schneidewerkzeuges, wie eines Sägeblattes (1), wobei dieses derart verschiebbar ist, dass aufeinanderfolgend die Zähne in einer Bearbeitungsstellung, in der die Zahn- und Zwischenraumformation erzeugt werden, positioniert werden können, wobei der Zahn oder der Zwischenraum durch Verstellen eines Werkzeuges (8), unter der Kontrolle eines Computersystems, bearbeitet wird, wobei die Betriebsbewegung des Werkzeuges (8) in bezug auf die zu bearbeitenden Zähne (2) des Sägeblattes zwangsläufig einem Bearbeitungsweg (19) folgt, der durch Bewegung entlang der Richtungskoordinaten (X,Y), die eine Neigung zueinander aufweisen, definiert ist, wobei eine der Richtungskoordinaten (Y) axial zur erforderlichen Richtung der Vorderseite (3) des zu bearbeitenden Zahnes (2) ausgerichtet ist, auf die Weise, dass die Vorderseite (3) des Zahnes, dessen Zwischenraum (5), sowie die Hinterseite (6) und die Oberseite (7) eines unmittelbar angrenzend gelegenen Zahnes (2) bearbeitet werden, gekennzeichnet durch positionsbezogen unbewegliches Anbringen des Sägeblattes, derart, dass der nächste zu schleifende Zahn während der Bearbeitung unbeweglich in einer Referenzstellung positioniert wird, wobei das Computersystem (51-68) der Kontrolle der Verschiebung des Werkzeuges (8) entlang den genannten Koordinaten X und Y relativ zum positionsbezogen unbeweglichen Sägeblatt dient, wobei die Zahn- und Zwischenraumformationen, entsprechend voreingestellten Bearbeitungsprofilen, bearbeitet werden und die Bearbeitung der Vorderseite (3) des Zahnes, dessen Zwischenraum (5), sowie der Hinter- und des Oberseite (6,7) eines unmittelbar angrenzend gelegenen Zahnes (2) durch ein einziges, ununterbrochenes Passieren des Werkzeuges (8) relativ zum positionsbezogen unbeweglichen Sägeblatt erreicht werden kann.

2. Verfahren gemäß Anspruch 1, dadurch gekennzeichnet, dass die Bewegung des Werkzeuges (8) relativ zum Sägeblatt (1) reversibel ist, sodass ein Entfernen jeglicher Grate, die durch die Maschinenbearbeitung der Oberseite (7) des Zahnes (2) während der Ausgangsschliffpassage durch das Schleifwerkzeug (8) entstanden sind, ermöglicht wird.

3. Apparat zur Erstellung einer Zahn- und Zwischenraumformation, oder einer Kombination aus beiden, für die Zähne (2) eines Schneidewerkzeuges, wie eines Sägeblattes (1), einschließlich Vorrichtungen zum Verschieben des Sägeblattes, um hintereinander die Zähne in eine Bearbeitungsstellung zu bringen, in der die Zahn- und Zwischenraumformationen erzeugt werden, Vorrichtungen zum Einspannen eines Werkzeuges zur Bearbeitung der Sägeblattzähne, während sich diese in der genannten Bearbeitungsstellung befinden, derart, dass die Betriebsbewegung des Werkzeugs (8) in bezug auf die zu bearbeitenden Zähne (2) des Sägeblattes zwangsläufig einem Bearbeitungsweg (19) folgt, der durch Bewegung entlang der Richtungskoordinaten (X,Y), die eine Neigung zueinander aufweisen, definiert ist, wobei eine der Richtungskoordinaten (Y) axial zur erforderlichen Richtung der Vorderseite (3) des zu bearbeitenden Zahnes (2) ausgerichtet ist, sowie Vorrichtungen zum Verschieben des Werkzeugs unter der Kontrolle eines Computersystems (51-68), derart, dass die Vorderseite (3) des Zahnes, dessen Zwischenraum (5), sowie die Hinterseite (6) und die Oberseite (7) des nächsten Zahnes (2) bearbeitet werden, gekennzeichnet durch Vorrichtungen zum positionsbezogen unbeweglichen Anbringen des Sägeblattes, derart, dass während der Bearbeitung eines Zahnes das Sägeblatt eine positionsbezogene Unbeweglichkeit aufweist, wobei das Computersystem (51-68) der Kontrolle der Verschiebung des Werkzeuges (8) relativ zum positionsbezogen unbeweglichen Sägeblatt dient, wobei die Zahn- und Zwischenraumformation, entsprechend voreingestellten Bearbeitungsprofilen, während eines einzigen, ununterbrochenen Passierens des Werkzeuges (8) relativ zum positionsbezogen unbeweglichen Sägeblatt, bearbeitet wird.

4. Apparat gemäß Anspruch 3, dadurch gekennzeichnet, dass die zwei genannten Richtungskoordinaten (X, Y) Rechtwinkligkeit zueinander aufweisen.

5. Apparat gemäß Anspruch 3 oder 4, dadurch gekennzeichnet, dass das Werkzeug (8) betriebsbezogen durch ein Gleitelement (27) getragen wird, welches gleitfähig in einem Gleitführungselement (30) an einem Stützelement (28) montiert ist, auf eine solche Weise, dass dieses relativ zur Stützeinheit winkelbezogen einstellbar ist, wobei die Gleitrichtung des Gleitelementes (27) axial zum benötigten Seitenwinkel der Zahnvorderseite ausgerichtet werden kann, um so die genannte Werkzeugbewegungsrichtung (Y) zu definieren; und der Apparat Vorrichtungen zum Montieren der Stützeinheit, auf die Weise, dass letztere entlang der Richtung (X) verschiebbar ist, sowie Vorrichtungen, steuerbar durch das Computersystem (51-68), um die Verschiebung des Gleitelementes (27) und des Stützelementes (28) in den genannten Richtungen zu steuern, aufweist.

6. Apparat gemäß Anspruch 5, gekennzeichnet durch pneumatische oder hydraulische Zylinder zur Erzeugung der betriebsbezogenen Verschiebung der Gleit-(27) und der Stützeinheit (28) und durch Vorrichtungen, die auf vom Computersystem (51-68) ausgehende Steuersignale ansprechen, um den Betrieb der Zylinder zu steuern.

7. Apparat gemäß Anspruch 3, 4, 5 oder 6, dadurch gekennzeichnet, dass das Computersystem (51-68) Eingabevorrichtungen (55, 56) zur Errichtung einer Vielzahl von Bearbeitungsprofilen für den genannten Werkzeugverschiebeweg (19) und Vorrichtungen (51) zur Speicherung derartiger Profile einschließt.

8. Apparat gemäß Anspruch 3, 4, 5, 6 oder 7, dadurch gekennzeichnet, dass das Computersystem Eingabespeichervorrichtungen (58, 59) zur Speicherung von Daten, die benötigten Verschiebungen der Gleit- und der Stützeinheit, zur Erstellung eines benötigten Schleifprofiles, zugeordnet sind, aufweist.

9. Apparat gemäß Anspruch 3, 4, 5, 6, 7 oder 8, dadurch gekennzeichnet, dass das Computersystem (51-68) Eingabespeichervorrichtungen (60, 61) zur Speicherung von Daten, die den Betriebsgeschwindigkeiten des Werkzeuges zugeordnet sind, aufweist.

10. Apparat gemäß Anspruch 3, 4, 5, 6, 7, 8 oder 9, dadurch gekennzeichnet, dass das Computersystem (51-68) Eingabespeichervorrichtungen (54) zur Speicherung von Daten, die den Betriebskenndaten des Werkzeuges (8) zugeordnet sind, aufweist.

11. Apparat gemäß einem der Ansprüche 3 bis 10, dadurch gekennzeichnet, dass die Bewegung des Werkzeuges (8) relativ zum Sägeblatt (1) reversibel ist, sodass ein Entfernen jeglicher Grate, die durch die Maschinenbearbeitung der Oberseite (7) des Zahnes (2) während der Ausgangsschliffpassage durch das Schleifwerkzeug (8) entstanden sind, ermöglicht wird.

## Revendications

1. Procédé pour mettre en forme une formation ou combinaison dent/creux pour les dents (2) d'un outil de coupe, tel qu'une lame de scie (1), qui peut être déplacé de manière à permettre aux dents successives d'être positionnées dans une position d'usinage dans laquelle les formations dents/creux sont produites, en déplaçant, sous le contrôle d'un système informatique, un outil (8) pour ainsi usiner la dent ou le creux, de telle sorte que les mouvements fonctionnels de l'outil (8) soient contraints de suivre par rapport aux dents (2) de la lame de scie une trajectoire d'usinage (19) définie par les coordonnées de direction de mouvement (X, Y) qui sont inclinées l'une vers l'autre et dont une coordonnée de direction (Y) est alignée avec la direction requise pour la face avant (3) de la dent (2) qui est usinée et de telle sorte que la face avant (3) de la dent, son creux (5), la face arrière (6) et la face supérieure (7) d'une dent immédiatement adjacente (2) soient usinés, caractérisé par le fait de maintenir solidement en place la lame de scie de manière à ce que la dent suivante à meuler soit solidement maintenue lors de l'usinage dans une position de référence, en ce que le système informatique (51 à 68) sert à commander les déplacements de l'outil (8) le long desdites coordonnées X et Y par rapport à la lame solidement maintenue en place, en ce que la formation dent/creux est usinée selon des profils d'usinage prédéterminés et en ce que l'usinage de la face avant (3) de la dent, son creux (5) et les faces arrière et avant (6, 7) d'une dent (2) immédiatement adjacente peut être effectué par un seul passage ininterrompu de l'outil (8) par rapport à la lame maintenue en place.

2. Procédé selon la revendication 1, et caractérisé en ce que le mouvement de l'outil (8) par rapport à la lame de scie (1) est réversible afin de permettre le retrait de toutes les barbes d'usinage produites sur la face supérieure (7) d'une dent (2) lors du passage initial à des fins de meulage de l'outil de meulage (8).

3. Dispositif pour mettre en forme une formation ou combinaison dent/creux pour les dents (2) d'un outil de coupe tel qu'une lame de scie (1) comprenant des moyens pour déplacer la lame pour mettre des dents successives dans une position d'usinage dans laquelle sont produites les formations dent/creux, des moyens pour monter un outil afin d'usiner les dents de la lame dans ladite position d'usinage, de telle sorte que les mouvements fonctionnels de l'outil (8) par rapport aux dents (2) de la lame de scie à usiner soient contraints de suivre une trajectoire d'usinage (19) définie par les coordonnées de direction de mouvement (x, y) qui sont inclinées l'une vers l'autre et dont une coordonnée de direction (y) est alignée avec la direction requise pour la face avant (3) de la dent (2) qui est usinée et des moyens pour déplacer l'outil sous le contrôle d'un système informatique (51 à 68), de telle sorte que la face avant (3) de la dent, son creux (5), la face arrière (6) et la face supérieure (7) de la dent suivante à usiner sont caractérisées par des moyens pour maintenir solidement en place la lame de scie de manière à ce que, tandis qu'une dent est usinée, la lame soit maintenue en place, et en ce que le système informatique (51 à 68) sert à commander les déplacements de l'outil (8) par rapport à la lame maintenue en place, de telle sorte que la formation dent/creux soit usinée selon des profils d'usinage prédéterminés en un seul passage ininterrompu de l'outil (8) par rapport à la lame maintenue en place.

4. Dispositif selon la revendication 3, et caractérisé en ce que lesdites deux coordonnées de direction (X, Y) forment un angle droit l'une par rapport à l'autre.

5. Dispositif selon la revendication 3 ou 4, et caractérisé en ce que l'outil (8) est supporté de manière fonctionnelle par un élément coulissant (27) susceptible de coulisser dans un élément formant guide coulissant (30) monté sur une unité de support (28), de manière à pouvoir être ajusté de manière angulaire par rapport à l'unité de support, moyennant quoi la direction de coulissement de l'élément coulissant (27) peut être déterminée pour s'aligner avec un angle plat requis pour une face avant de dent, pour ainsi définir ladite direction de mouvement (Y) de l'outil, des moyens pour monter l'unité de support de manière à ce que cette dernière puisse être déplacée le long de la direction (X), et des moyens susceptibles d'être commandés par le système informatique (51 à 68) pour commander les déplacements de l'élément coulissant (27) et l'unité de support (28) dans lesdites directions.

6. Dispositif selon la revendication 5, et caractérisé par des vérins pneumatiques ou hydrauliques pour produire les déplacements opérationnels de l'élément coulissant (27) et de l'unité de support (28), et par des moyens répondant aux signaux de commande produits par le système informatique (51 à 68) pour commander le fonctionnement des vérins.

7. Dispositif selon les revendications 3, 4, 5 ou 6, et caractérisé en ce que le système informatique (51 à 68) comprend des moyens d'entrée (55, 56) pour établir une pluralité de profils d'usinage différents pour ladite trajectoire de déplacement d'outil (19) et des moyens (51) pour mémoriser ces profils.

8. Dispositif selon les revendications 3, 4, 5, 6 ou 7, et caractérisé en ce que le système informatique comprend des moyens de mémorisation d'entrée (58, 59) pour mémoriser des données associées aux déplacements requis de l'élément coulissant et de l'unité de support pour produire un profil de meulage requis.

9. Dispositif selon les revendications 3, 4, 5, 6, 7 ou 8, et caractérisé en ce que le système informatique (51 à 68) comprend des moyens de stockage d'entrée (60, 61) pour stocker des données associées aux vitesses fonctionnelles de l'outil.

10. Dispositif selon les revendications 3, 4, 5, 6, 7, 8 ou 9, et caractérisé en ce que le système informatique (51 à 68) comprend des moyens de mémorisation d'entrée (54) pour mémoriser des données associées aux caractéristiques fonctionnelles de l'outil (8).

11. Dispositif selon l'une quelconque des revendications 3 à 10, et caractérisé en ce que le mouvement de l'outil (8) par rapport à la lame de scie (1) est réversible afin de permettre le retrait de toutes les barbes d'usinage produites sur la face supérieure (7) d'une dent (2) lors du passage initial à des fins de meulage de l'outil de meulage (8).
